# EUROPEAN PATENT APPLICATION

(11) **EP 2 244 120 A1**
(43) Date of publication of application: **27.10.2010**
(21) Application number: 09711934.1
(22) Date of filing: 19.02.2009
(51) Int. Cl.: G02F 1/133, G02F 1/1335, G02F 1/13357, G02F 1/1345, G02F 1/1368, G09F 9/00, G09G 3/20, G09G 3/34, G09G 3/36

(54) **DISPLAY DEVICE PROVIDED WITH OPTICAL SENSOR**

(30) Priority: 21.02.2008 JP 2008039785
(71) Applicant: Sharp Kabushiki Kaisha, Osaka-shi Osaka 545-8522 (JP)
(72) Inventor: FUJIOKA, Akizumi, Osaka-shi Osaka 545-8522 (JP); KUBOTA, Akinori, Osaka-shi Osaka 545-8522 (JP); UEHATA, Masaki, Osaka-shi Osaka 545-8522 (JP)
(74) Representative: Goddar, Heinz J.
(86) International application number: PCT/JP2009/052860
(87) International publication number: WO 2009/104667

(57) **Abstract**

The present invention relates to a display device in which a plurality of optical sensors are provided in a display panel. A liquid crystal panel with built-in sensors (11) includes, in a pixel array (18), a plurality of pixel circuits and a plurality of optical sensors which are arranged two-dimensionally. A panel drive circuit (17) writes signals generated according to display data D3 into the pixel circuits, and reads signals generated according to the amounts of received light, from the optical sensors. An image processing unit (12) switches display data which is used before reading by the panel drive circuit (17) is performed, to fixed data suitable for image input. For the fixed data, white image data or blue image data is used. According to the present invention, by performing image input after displaying, using fixed data, an image suitable for image input, the influence of a displayed image is eliminated, enabling to perform image input and touch position detection with high accuracy, irrespective of displayed image. The display device of the present invention can be used as a liquid crystal display device.

## Description

### TECHNICAL FIELD

The present invention relates to a display device and more particularly to a display device having a plurality of optical sensors provided in a display panel.

### BACKGROUND ART

In recent years, electronic devices that can be operated by touching a screen with a finger, a pen, etc., have proliferated. In addition, for a method of detecting a touch position on a display screen, a method is known in which a plurality of optical sensors are provided in a display panel and a shadow image which is created when a finger or the like approaches the screen is detected using the optical sensors. In the method of detecting a shadow image, when the illumination of outside light is low (the surroundings are dark), it becomes difficult to distinguish between a shadow image and a background in an image obtained by the optical sensors and accordingly a touch position may not be able to be detected properly. In view of the above, for display devices including a backlight, a method is also known in which a reflection image which is created when backlight light hits a finger is detected using optical sensors.

In addition, by outputting, as it is, an image based on signals obtained using the optical sensors, the display device can be used as an image input device. For example, when a liquid crystal panel provided with a plurality of optical sensors is used as a display of a mobile phone, by providing an image input instruction with a business card being held over the front surface of the liquid crystal panel, a business card image can be captured into the mobile phone through the liquid crystal panel.

A display device in which a plurality of optical sensors are provided in a display panel is described in, for example, Patent Document 1. In addition, Patent Document 2 describes a display device in which, in order to improve the detection accuracy of optical sensors, a backlight is turned on during a display period for displaying display data on a display unit, and the backlight is turned off during a sense period during which sensor outputs from sensor units are read.
[Patent Document 1] Japanese Laid-Open Patent Publication No. 11-326954
[Patent Document 2] Japanese Laid-Open Patent Publication No. 2006-317682

### DISCLOSURE OF THE INVENTION

### PROBLEMS TO BE SOLVED BY THE INVENTION

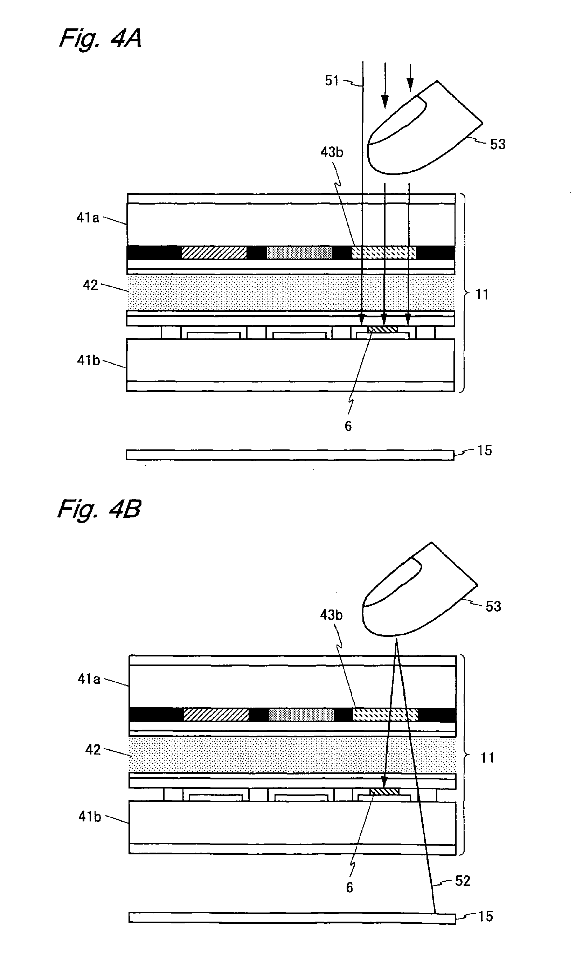

However, conventional display devices having optical sensors have a problem that display data is mixed, as noise, in output data from optical sensors, decreasing the detection accuracy for a touch position and the accuracy of image input. For example, in a liquid crystal display device having optical sensors, light having passed through a liquid crystal panel enters an optical sensor provided in the liquid crystal panel (see Figs. 4A and 4B which will be described later). Hence, the amount of light detected by the optical sensor varies depending on the light transmittance of the liquid crystal panel, and output data from the optical sensor is influenced by display data. In addition, in a liquid crystal panel that uses the same data signal lines for performing writing into pixel circuits and reading from optical sensors, since charges provided to the data signal lines during writing influence read data, output data from the optical sensors is influenced by display data. For such a reason, display data is mixed, as noise, in output data from the optical sensors.

In particular, when displayed gradation is dark or when display data includes only a small amount of a color with a high light reception sensitivity of the optical sensors, the amount of light detected by the optical sensors is small, and thus, mixing of display data significantly decreases the detection accuracy for a touch position and the accuracy of image input.

An object of the present invention is therefore to provide a display device capable of performing image input and touch position detection with high accuracy, irrespective of displayed image.

### MEANS FOR SOLVING THE PROBLEMS

According to a first aspect of the present invention, there is provided a display device including a plurality of optical sensors, the display device including: a display panel including a plurality of pixel circuits and a plurality of optical sensors which are arranged two-dimensionally; a drive circuit that performs an operation of writing signals generated according to display data into the pixel circuits, and an operation of reading signals generated according to amounts of received light from the optical sensors; and a display data switching unit that switches display data which is used before reading by the drive circuit is performed, to fixed data suitable for image input.

According to a second aspect of the present invention, in the first aspect of the present invention, the fixed data is data representing an image with a single color.

According to a third aspect of the present invention, in the second aspect of the present invention, the fixed data is data representing an image with a single color including a large amount of color component with a high light reception sensitivity of the optical sensors.

According to a fourth aspect of the present invention, in the third aspect of the present invention, the fixed data is data representing a white image.

According to a fifth aspect of the present invention, in the third aspect of the present invention, the display panel is a liquid crystal panel formed of CG (Continuous Grain) silicon, and the fixed data is data representing a blue image.

According to a sixth aspect of the present invention, in the first aspect of the present invention, the display device further includes an image recognition processing unit that performs an image recognition process on a scanned image based on the signals read from the optical sensors, to detect an object included in the scanned image.

According to a seventh aspect of the present invention, in the sixth aspect of the present invention, the display device further includes a backlight that irradiates a back surface of the display panel with light, wherein the image recognition processing unit detects at least a reflection image of the object.

According to an eighth aspect of the present invention, in the first aspect of the present invention, the display data switching unit is included in an image processing unit which is provided in a previous stage to the drive circuit.

According to a ninth aspect of the present invention, in the first aspect of the present invention, the display data switching unit is included in the drive circuit.

According to a tenth aspect of the present invention, there is provided a method of driving a display device having a display panel which includes a plurality of pixel circuits and a plurality of optical sensors which are arranged two-dimensionally, the method including the steps of: writing signals generated according to display data into the pixel circuits; reading signals generated according to amounts of received light from the optical sensors; and switching display data which is used before reading is performed, to fixed data suitable for image input.

According to an eleventh aspect of the present invention, there is provided a device having an image display function and an image input function, the device including: a display device; and a display control unit, wherein the display device includes: a display panel including a plurality of pixel circuits and a plurality of optical sensors which are arranged two-dimensionally; and a drive circuit that performs an operation of writing signals generated according to display data which is provided from the display control unit, into the pixel circuits, and an operation of reading signals generated according to amounts of received light, from the optical sensors, and when the display control unit provides an image input instruction to the display device, the display control unit provides, as the display data, fixed data suitable for image input.

### EFFECT OF THE INVENTION

According to the first, tenth, or eleventh aspect of the present invention, display data which is used before reading is performed is switched to fixed data, and image input using the optical sensors is performed after an image based on the fixed data is displayed. When an image based on fixed data is displayed, the light transmittances of the display panel and the states of the pixel circuits, the signal lines, etc., included in the display device are not influenced by a previous displayed image. Accordingly, by displaying, using fixed data, an image suitable for image input, such as an image with a single color or an image including a large amount of color component with a high light reception sensitivity of the optical sensors, and thereafter performing image input, the influence of a displayed image is eliminated, enabling to perform image input with high accuracy, irrespective of displayed image and output an obtained image, and to perform touch position detection with high accuracy based on the image.

According to the second aspect of the present invention, image input using the optical sensors is performed after an image with a single color is displayed. When an image with a single color is displayed, the light transmittances of the display panel and the states of the pixel circuits, the signal lines, etc., included in the display device become uniform. Accordingly, by performing image input after displaying an image with a single color using fixed data, the influence of a displayed image is eliminated and the internal states of the display device are uniformalized, enabling to perform image input and touch position detection with high accuracy.

According to the third aspect of the present invention, image input using the optical sensors is performed after an image with a single color including a large amount of color component with a high light reception sensitivity of the optical sensors is displayed. When image input is performed after an image with a single color having such a characteristic is displayed, the optical sensors operate at a high light reception sensitivity. Accordingly, the influence of a displayed image is eliminated and the internal states of the displayed image are uniformalized, and the light reception sensitivity of the optical sensors increases, enabling to perform image input and touch position detection with high accuracy.

According to the fourth aspect of the present invention, by using data representing a white image as fixed data, the influence of a displayed image is eliminated and the internal states of the displayed image are uniformalized, and the light reception sensitivity of the optical sensors increases, enabling to perform image input and touch position detection with high accuracy.

According to the fifth aspect of the present invention, when the liquid crystal panel including a plurality of optical sensors is formed of CG silicon, the light reception sensitivity of the optical sensors is high for blue light. Thus, by using data representing a blue image as fixed data, the influence of a displayed image is eliminated and the internal states of the displayed image are uniformalized, and the light reception sensitivity of the optical sensors increases, enabling to perform image input and touch position detection with high accuracy.

According to the sixth aspect of the present invention, by performing an image recognition process on a scanned image, an object included in the scanned image can be detected by the display device.

According to the seventh aspect of the present invention, when a reflection image of an object is detected, a scanned image is darkened and thus a problem of a decrease in the detection accuracy for a touch position becomes remarkable. However, even in such a case, by performing image input after displaying, using fixed data, an image suitable for image input, the influence of display data is eliminated, enabling to perform image input and touch position detection with high accuracy, irrespective of displayed image.

According to the eighth aspect of the present invention, by switching display data which is used before reading is performed, to fixed data by an image processing unit which is provided in a previous stage to the drive circuit, image input can be performed after an image suitable for image input is displayed using the fixed data. With this, the influence of display data is eliminated, enabling to perform image input and touch position detection with high accuracy, irrespective of displayed image.

According to the ninth aspect of the present invention, by switching, by the drive circuit, display data which is used before reading is performed to fixed data, image input can be performed after an image suitable for image input is displayed using the fixed data. With this, the influence of display data is eliminated, enabling to perform image input and touch position detection with high accuracy, irrespective of displayed image.

### BRIEF DESCRIPTION OF THE DRAWINGS

Fig. 1 is a block diagram showing a configuration of a liquid crystal display device according to a first embodiment of the present invention.
Fig. 2 is a block diagram showing a detailed configuration of a liquid crystal panel of the device shown in Fig. 1.
Fig. 3 is a diagram showing a cross section of the liquid crystal panel and an arrangement position of a backlight of the device shown in Fig. 1.
Fig. 4A is a diagram showing the principle of a method of detecting a shadow image in the device shown in Fig. 1.
Fig. 4B is a diagram showing the principle of a method of detecting a reflection image in the device shown in Fig. 1.
Fig. 5A is a diagram showing an example of a scanned image including a shadow image of a finger.
Fig. 5B is a diagram showing an example of a scanned image including a shadow image of a finger and a reflection image of the ball of the finger.
Fig. 6 is a flowchart showing the operations of the device shown in Fig. 1 performed when an output control signal is at a high level.
Fig. 7 is a flowchart showing the operations of the device shown in Fig. 1 performed when the output control signal is at a low level.
Fig. 8 is a table showing a summary of the operations of the device shown in Fig. 1.
Fig. 9 is a timing chart for the device shown in Fig. 1.
Fig. 10 is a block diagram showing a configuration of a liquid crystal display device according to a second embodiment of the present invention.
Fig. 11 is a block diagram showing a configuration of a business card reading device according to a third embodiment of the present invention.
Fig. 12 is a flowchart showing the operations of the device shown in Fig. 11.
Fig. 13 is a block diagram showing a configuration of a business card reading device according to a fourth embodiment of the present invention.

### DESCRIPTION OF REFERENCE NUMERALS

1 Pixel circuit
2 Optical sensor
6 Photodiode
10, 20, and 71 Liquid crystal display device
11 and 21 Liquid crystal panel with built-in sensors
12, 22, and 72 Image processing unit
13 A/D converter
14 Backlight power supply circuit
15 Backlight
16 Frame memory
17 and 27 Panel drive circuit
18 Pixel array
31 Scanning signal line drive circuit
32 Data signal line drive circuit
33 Sensor row drive circuit
34 Sensor output amplifier
35 to 38 Switch
51 Outside light
52 Backlight light
53 Object
60 and 70 Business card reading device
61 and 73 Display control unit
62 CPU
64 and 74 Business card reading program

### BEST MODE FOR CARRYING OUT THE INVENTION

### (First Embodiment)

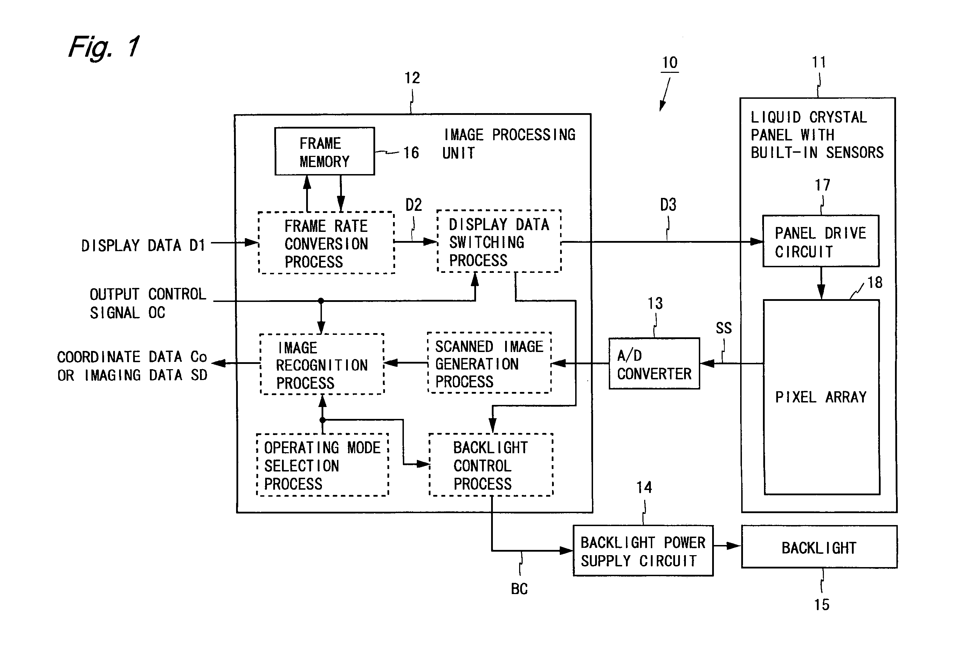

Fig. 1 is a block diagram showing a configuration of a liquid crystal display device according to a first embodiment of the present invention. A liquid crystal display device 10 shown in Fig. 1 includes a liquid crystal panel with built-in sensors 11, an image processing unit 12, an A/D converter 13, a backlight power supply circuit 14, and a backlight 15. The image processing unit 12 includes a frame memory 16. The liquid crystal panel with built-in sensors 11 (hereinafter, referred to as the liquid crystal panel 11) includes a panel drive circuit 17 and a pixel array 18. The pixel array 18 includes a plurality of pixel circuits and a plurality of optical sensors which are arranged two-dimensionally (details will be described later). The liquid crystal display device 10 has a touch position detection function and an image input function in addition to an image display function.

Display data D1 and an output control signal OC are inputted to the liquid crystal display device 10 from an external source. The image processing unit 12 performs a frame rate conversion process on the display data D1 using the frame memory 16, and thereby obtains display data D2. Then, the image processing unit 12 performs a display data switching process (details will be described later) on the display data D2 and outputs display data D3. The panel drive circuit 17 writes voltages according to the display data D3 into the pixel circuits of the liquid crystal panel 11. With this, an image based on the display data D3 is displayed on the liquid crystal panel 11.

The backlight 15 is configured by, for example, white LEDs (Light Emitting Diodes) and irradiates the back surface of the liquid crystal panel 11 with light (backlight light). The backlight power supply circuit 14 switches whether to supply a power supply voltage to the backlight 15, according to a backlight control signal BC outputted from the image processing unit 12. In the following, the backlight power supply circuit 14 supplies a power supply voltage when the backlight control signal BC is at a high level, and does not supply a power supply voltage when the backlight control signal BC is at a low level. The backlight 15 is turned on during a period during which the backlight control signal BC is at a high level, and is turned off during a period during which the backlight control signal BC is at a low level. Note that the backlight 15 can employ any configuration and may be configured by a combination of red, green, and blue LEDs, or cold cathode fluorescent lamps (CCFLs).

The panel drive circuit 17 performs the operation of reading voltages according to the amounts of received light, from the optical sensors of the liquid crystal panel 11, in addition to the operation of writing voltages into the pixel circuits of the liquid crystal panel 11. Output signals from the optical sensors are outputted external to the liquid crystal panel 11, as sensor output signals SS. The A/D converter 13 converts the analog sensor output signals SS to digital signals. The image processing unit 12 generates a digital image (hereinafter, referred to as a scanned image), based on the digital signals outputted from the A/D converter 13. The scanned image may include an image of a matter to be detected (e.g., a finger, a pen, etc.; hereinafter, referred to as an object) which is present in the vicinity of the front surface of the liquid crystal panel 11. When the output control signal OC is at a high level, the image processing unit 12 performs an image recognition process on the scanned image to detect an object and thereby determines an object position in the scanned image, and outputs coordinate data Co representing a touch position. On the other hand, when the output control signal OC is at a low level, the image processing unit 12 does not perform the image recognition process and outputs the scanned image as it is, as imaging data SD.

The liquid crystal display device 10 performs, during each frame time, either the operation of displaying an image based on display data D2 or the operation of inputting a scanned image. A frame time during which image display is performed is hereinafter referred to as a "display period", and a frame time during which image input is performed is hereinafter referred to as a "sensing period". In addition, the liquid crystal display device 10 switches whether to perform image display or image input during each frame time, according to an output control signal OC. In the following, the liquid crystal display device 10 alternately performs image display and image input every frame time when the output control signal OC is at a high level, and performs image input during all frame times when the output control signal OC is at a low level.

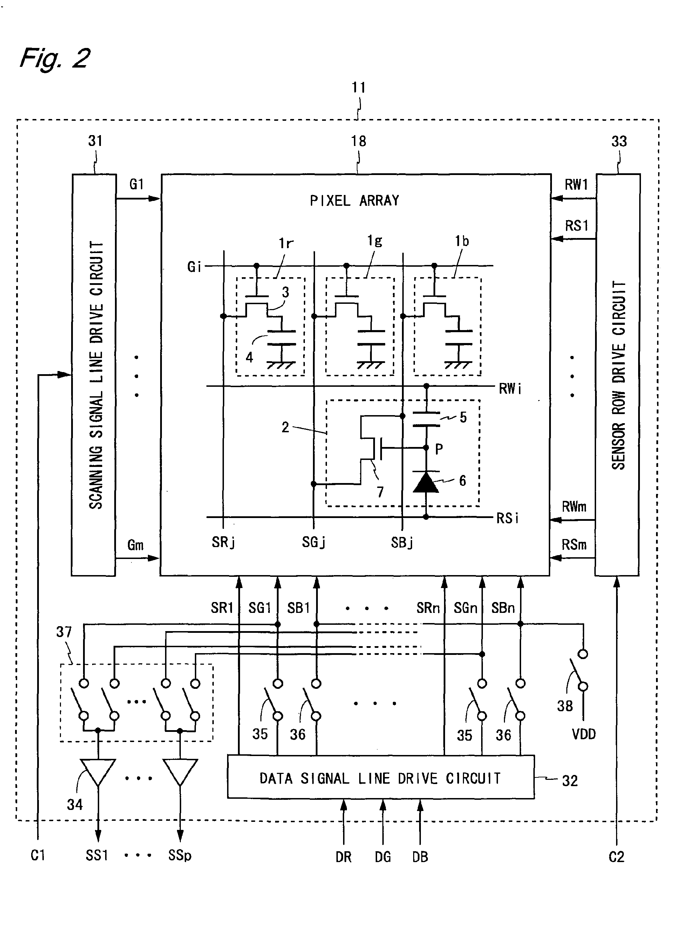

Fig. 2 is a block diagram showing a detailed configuration of the liquid crystal panel 11. As shown in Fig. 2, the pixel array 18 includes m scanning signal lines G1 to Gm; 3n data signal lines SR1 to SRn, SG1 to SGn, and SB1 to SBn; and (m × 3n) pixel circuits 1. In addition to them, the pixel array 18 includes (m × n) optical sensors 2; m sensor read lines RW1 to RWm; and m sensor reset lines RS1 to RSm. The liquid crystal panel 11 is formed using CG (Continuous Grain) silicon.

The scanning signal lines G1 to Gm are arranged parallel to one another. The data signal lines SR1 to SRn, SG1 to SGn, and SB1 to SBn are arranged parallel to one another so as to vertically intersect the scanning signal lines G1 to Gm. The sensor read lines RW1 to RWm and the sensor reset lines RS1 to RSm are arranged parallel to the scanning signal lines G1 to Gm.

The pixel circuits 1 are respectively provided near intersections of the scanning signal lines G1 to Gm and the data signal lines SR1 to SRn, SG1 to SGn, and SB1 to SBn. The pixel circuits 1 as a whole are arranged two-dimensionally such that m pixel circuits 1 are arranged in a column direction (a vertical direction in Fig. 2) and 3n pixel circuits 1 are arranged in a row direction (a horizontal direction in Fig. 2). The pixel circuits 1 are classified into R pixel circuits 1r, G pixel circuits 1g, and B pixel circuits 1b, depending on the color of a color filter provided. The three types of pixel circuits 1r, 1g, and 1b are arranged side by side in the row direction and three pixel circuits 1r, 1g, and 1b form one pixel.

Each pixel circuit 1 includes a TFT (Thin Film Transistor) 3 and a liquid crystal capacitance 4. A gate terminal of the TFT 3 is connected to a corresponding scanning signal line Gi (i is an integer between 1 and m inclusive), a source terminal is connected to a corresponding one of the data signal lines SRj, SGj, and SBj (j is an integer between 1 and n inclusive), and a drain terminal is connected to one electrode of the liquid crystal capacitance 4. To the other electrode of the liquid crystal capacitance 4 is applied a common electrode voltage. The data signal lines SG1 to SGn connected to the G pixel circuits 1g are hereinafter referred to as the G data signal lines and the data signal lines SB1 to SBn connected to the B pixel circuits 1b as the B data signal lines. Note that each pixel circuit 1 may include an auxiliary capacitance.

The light transmittance of a pixel circuit 1 (the luminance of a sub-pixel) is determined by a voltage written into the pixel circuit 1. To write a certain voltage into a pixel circuit 1 connected to a scanning signal line Gi and a data signal line SXj (X is any one of R, G, and B), a high-level voltage (a voltage that places a TFT 3 in an on state) is applied to the scanning signal line Gi and a voltage to be written is applied to the data signal line SXj. By writing a voltage according to display data D3 into the pixel circuit 1, the luminance of the sub-pixel can be set to a desired level.

Each optical sensor 2 includes a capacitor 5, a photodiode 6, and a sensor preamplifier 7, and is provided for each pixel. One electrode of the capacitor 5 is connected to a cathode terminal of the photodiode 6 (this connecting point is hereinafter referred to as a node P). The other electrode of the capacitor 5 is connected to a corresponding sensor read line RWi and an anode terminal of the photodiode 6 is connected to a corresponding sensor reset line RSi. The sensor preamplifier 7 is configured by a TFT having a gate terminal connected to the node P and having a drain terminal connected to a corresponding B data signal line SBj and having a source terminal connected to a corresponding G data signal line SGj.

To detect the amount of light by an optical sensor 2 connected to a sensor read line RWi, a B data signal line SBj, etc. , a predetermined voltage is applied to the sensor read line RWi and a sensor reset line RSi and a power supply voltage VDD is applied to the B data signal line SBj. When, after the predetermined voltage is applied to the sensor read line RWi and the sensor reset line RSi, light enters a photodiode 6, a current according to the amount of entered light flows through the photodiode 6 and accordingly the voltage at a node P decreases by an amount corresponding to the amount of current having flown through. When a power supply voltage VDD is applied to the B data signal line SBj, the voltage at the node P is amplified by a sensor preamplifier 7 and the amplified voltage is outputted to a G data signal line SGj. Therefore, based on the voltage of the G data signal line SGj, the amount of light detected by the optical sensor 2 can be determined.

Around the pixel array 18 are provided a scanning signal line drive circuit 31, a data signal line drive circuit 32, a sensor row drive circuit 33, p sensor output amplifiers 34 (p is an integer between 1 and n inclusive), and a plurality of switches 35 to 38. The scanning signal line drive circuit 31, the data signal line drive circuit 32, and the sensor row drive circuit 33 correspond to the panel drive circuit 17 in Fig. 1.

The data signal line drive circuit 32 has 3n output terminals for the respective 3n data signal lines. The switches 35 are respectively provided between the G data signal lines SG1 to SGn and n output terminals provided for the respective G data signal lines SG1 to SGn, and the switches 36 are respectively provided between the B data signal lines SB1 to SBn and n output terminals provided for the respective B data signal lines SB1 to SBn. The G data signal lines SG1 to SGn are divided into groups, each including p G data signal lines. One switch 37 is provided between a k-th G data signal line in each group (k is an integer between 1 and p inclusive) and an input terminal of a k-th sensor output amplifier 34. All the B data signal lines SB1 to SBn are connected to one end of the switch 38. To the other end of the switch 38 is applied a power supply voltage VDD. The respective numbers of the switches 35 to 37 included in Fig. 2 are n and the number of the switch 38 is 1.

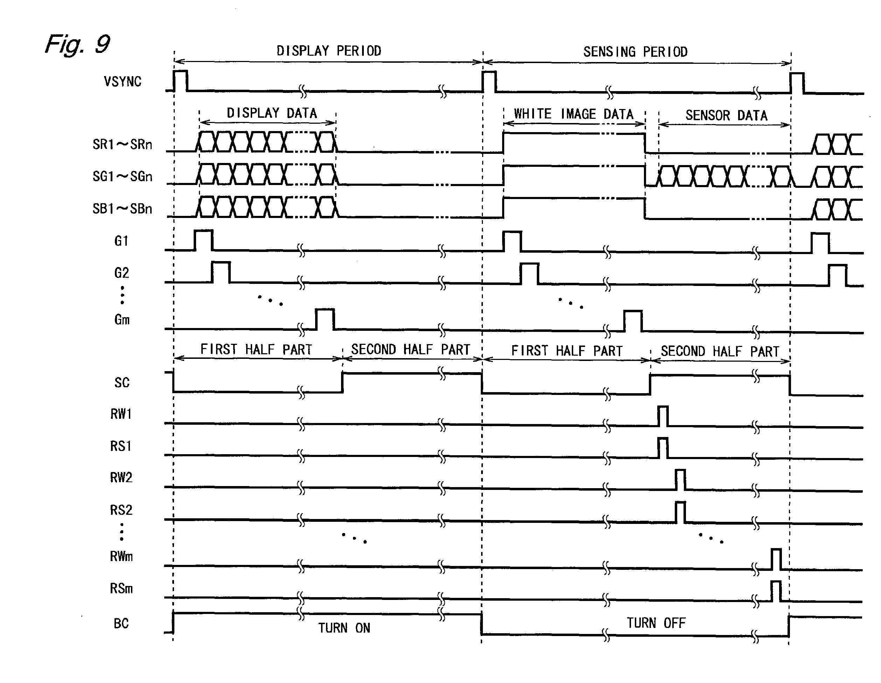

In the liquid crystal display device 10, one frame time is divided into a first half part during which signals (voltage signals according to display data, etc.) are written into the pixel circuits 1, and a second half part during which signals (voltage signals according to the amounts of received light) are read from the optical sensors 2. The circuits shown in Fig. 2 perform different operations for the display period and the sensing period and for the first half part and the second half part (see Fig. 9 which will be described later).

The scanning signal line drive circuit 31 and the data signal line drive circuit 32 operate during the first half part of the display period and the first half part of the sensing period. At this time, the switches 35 and 36 are placed in an on state and the switches 37 and 38 are placed in an off state. The scanning signal line drive circuit 31 selects, every line time, one scanning signal line from among the scanning signal lines G1 to Gm, according to a timing control signal C1 and applies a high-level voltage to the selected scanning signal line and applies a low-level voltage to the other scanning signal lines. The data signal line drive circuit 32 drives the data signal lines SR1 to SRn, SG1 to SGn, and SB1 to SBn by a line sequential system, based on display data DR, DG, and DB outputted from the image processing unit 12. More specifically, the data signal line drive circuit 32 stores at least a portion of each of the display data DR, DG, and DB for one row and applies, every line time, voltages according to the portions of the display data for one row to the data signal lines SR1 to SRn, SG1 to SGn, and SB1 to SBn. Note that the data signal line drive circuit 32 may drive the data signal lines SR1 to SRn, SG1 to SGn, and SB1 to SBn by a dot sequential system.

On the other hand, the sensor row drive circuit 33 and the sensor output amplifiers 34 operate during the second half part of the sensing period. At this time, the switches 35 and 36 are placed in an off state, the switch 38 is placed in an on state, and the switches 37 are placed in an on state in a time-division manner such that the G data signal lines SG1 to SGn are connected in turn to the input terminals of the sensor output amplifiers 34 on a group-by-group basis. The sensor row drive circuit 33 selects, every line time, one each from the sensor read lines RW1 to RWm and the sensor reset lines RS1 to RSm, according to a timing control signal C2 and applies a predetermined read voltage and a predetermined reset voltage to the selected sensor read line and sensor reset line, respectively, and applies a voltage different than those applied upon selection, to the other signal lines. The sensor output amplifiers 34 amplify voltages selected by their corresponding switches 37 and output the amplified voltages as sensor output signals SS1 to SSp.

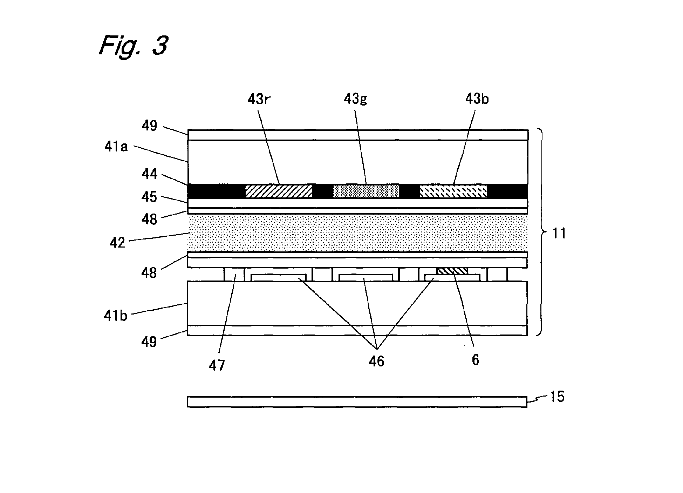

Fig. 3 is a diagram showing a cross section of the liquid crystal panel 11 and an arrangement position of the backlight 15. The liquid crystal panel 11 has a structure in which a liquid crystal layer 42 is sandwiched between two glass substrates 41a and 41b. One glass substrate 41a has color filters 43r, 43g, and 43b of three colors, a light-shielding film 44, a counter electrode 45, etc., provided thereon. The other glass substrate 41b has pixel electrodes 46, data signal lines 47, optical sensors 2, etc., provided thereon. As shown in Fig. 3, a photodiode 6 included in an optical sensor 2 is provided near a pixel electrode 46 where a blue color filter 43b is provided (the reason will be described later). Alignment films 48 are respectively provided on surfaces of the glass substrates 41a and 41b that face each other, and polarizing plates 49 are respectively provided on the other surfaces. Of the two surfaces of the liquid crystal panel 11, a surface on the side of the glass substrate 41a serves as the front surface and a surface on the side of the glass substrate 41b serves as the back surface. The backlight 15 is provided on the back surface side of the liquid crystal panel 11.

When the liquid crystal display device 10 detects a touch position on a display screen, the liquid crystal display device 10 uses either a method of detecting a shadow image or a method of detecting a reflection image (or both a shadow image and a reflection image). Fig. 4A is a diagram showing the principle of the method of detecting a shadow image and Fig. 4B is a diagram showing the principle of the method of detecting a reflection image. In the method of detecting a shadow image (Fig. 4A), an optical sensor 2 including a photodiode 6 detects outside light 51 having passed through the glass substrate 41a, the liquid crystal layer 42, etc. At this time, when an object 53 such as a finger is present in the vicinity of the front surface of the liquid crystal panel 11, the outside light 51 to enter the optical sensor 2 is blocked by the object 53. Thus, using the optical sensor 2, a shadow image of the object 53 created by the outside light 51 can be detected.

In the method of detecting a reflection image (Fig. 4B), an optical sensor 2 including a photodiode 6 detects reflected light of backlight light 52. More specifically, the backlight light 52 emitted from the backlight 15 passes through and gets out of the liquid crystal panel 11 through the front surface of the liquid crystal panel 11. At this time, when an object 53 is present in the vicinity of the front surface of the liquid crystal panel 11, the backlight light 52 is reflected off the object 53. For example, the balls of human fingers reflect light well. The reflected light of the backlight light 52 passes through the glass substrate 41a, the liquid crystal layer 42, etc., and enters the optical sensor 2. Thus, using the optical sensor 2, a reflection image of the object 53 created by the backlight light 52 can be detected.

In addition, by using the above-described two methods in combination, both a shadow image and a reflection image can be detected. That is, using the optical sensor 2, a shadow image of the object 53 created by the outside light 51 and a reflection image of the object 53 created by the backlight light 52 can be simultaneously detected.

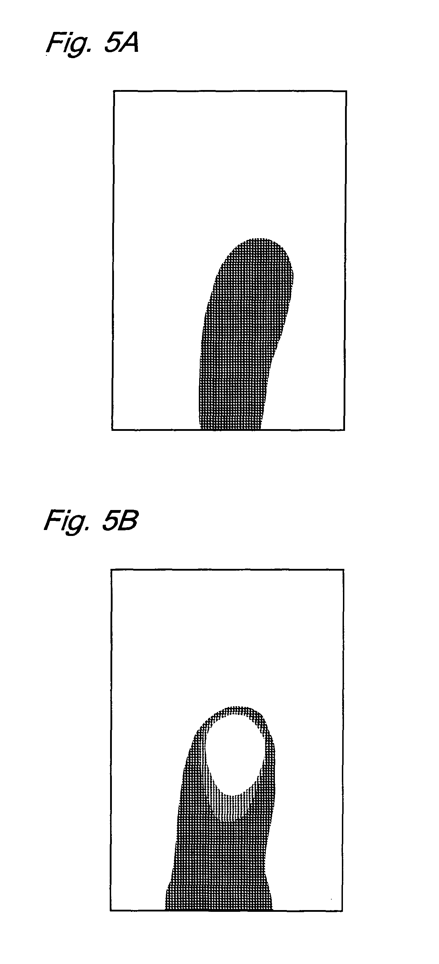

Figs. 5A and 5B are diagrams showing examples of a scanned image including a finger image. A scanned image shown in Fig. 5A includes a shadow image of a finger, and a scanned image shown in Fig. 5B includes a shadow image of a finger and a reflection image of the ball of the finger. The image processing unit 12 performs an image recognition process on such scanned images and outputs coordinate data Co representing a touch position or outputs the scanned images as they are as imaging data SD.

When the liquid crystal panel 11 is formed of CG silicon, the light reception sensitivity of the photodiodes 6 is high for blue light compared with those for red light and green light. In view of this, to facilitate the reception of blue light, as shown in Fig. 3, a photodiode 6 is provided near a pixel electrode 46 where a blue color filter 43b is provided. By thus arranging the photodiode 6 in a position where light of a color with a high light reception sensitivity is easily received, the amount of light detected by the photodiode 6 increases, enabling to increase the light reception sensitivity of the optical sensor 2.

A detail of the image processing unit 12 will be described below. As shown in Fig. 1, the image processing unit 12 performs a frame rate conversion process, a display data switching process, an operating mode selection process, a backlight control process, a scanned image generation process, and an image recognition process, and functions as a display data switching unit and an image recognition processing unit.

The image processing unit 12 performs, if necessary, the process (frame rate conversion process) of allowing the frame rate of display data D1 to match a frame rate used to drive the liquid crystal panel 11, using the frame memory 16. For example, when the frame rate of display data D1 is 30 frames/second and the frame rate used to drive the liquid crystal panel 11 is 60 frames/second, the image processing unit 12 temporarily writes the display data D1 into the frame memory 16 and reads the display data from the frame memory 16 at a rate twice that for the writing. With this, display data D2 having a frame rate twice that of the display data D1 is obtained. Note that when the frame rate of the display data D1 originally matches the frame rate used to drive the liquid crystal panel 11, the image processing unit 12 does not perform the frame rate conversion process.

In addition, the image processing unit 12 performs the process (display data switching process) of switching display data which is used before reading by the panel drive circuit 17 is performed, to fixed data Df suitable for image input. As described above, the panel drive circuit 17 performs writing into the pixel circuits 1 during the first half part of the display period and the first half part of the sensing period, and performs reading from the optical sensors 2 during the second half part of the sensing period. Correspondingly, the image processing unit 12 outputs, as display data D3, display data D2 having been subjected to frame rate conversion, during the first half part of the display period and outputs, as display data D3, fixed data Df during the first half part of the sensing period.

The fixed data Df as used herein refers to fixed data which is predetermined to be suitable for image input (data that does not depend on display data D1). For the fixed data Df, for example, it is preferred to use data representing an image with a single color; in particular, it is preferred to use data representing an image with a single color including a large amount of color component with a high light reception sensitivity of the optical sensors 2. Specifically, data representing a white image can be used as the fixed data Df. Alternatively, since, when the liquid crystal panel 11 is formed of CG silicon, the light reception sensitivity of the photodiodes 6 is high for blue light, data representing a blue image can be used as the fixed data Df.

In addition, the image processing unit 12 performs the process (operating mode selection process) of selecting either a mode that detects a shadow image of an object (hereinafter, referred to as the shadow image mode) or a mode that detects a reflection image (or both a shadow image and a reflection image) of an object (hereinafter, referred to as the reflection image mode). For example, when the illumination of outside light detected by an illumination sensor (not shown) is higher than or equal to a predetermined threshold value, the image processing unit 12 selects the shadow image mode and otherwise selects the reflection image mode.

In addition, the image processing unit 12 performs the process (backlight control process) of controlling the backlight 15 according to whether to switch display data to fixed data and whether the mode is the shadow image mode or the reflection image mode. Specifically, the image processing unit 12 controls the backlight control signal BC to a high level to turn on the backlight 15 during the display period and the sensing period in the reflection image mode, and controls the backlight control signal BC to a low level to turn off the backlight 15 during the sensing period in the shadow image mode.

In addition, the image processing unit 12 performs the process (scanned image generation process) of generating a scanned image, based on digital signals outputted from the A/D converter 13. In addition, the image processing unit 12 performs an image recognition process on the scanned image to detect an object, and outputs coordinate data Co representing an object position. In the shadow image mode a shadow image of an object is detected, and in the reflection image mode a reflection image (or both a shadow image and a reflection image) of an object is detected. Note that, when the output control signal OC is at a low level, the image processing unit 12 does not perform the image recognition process and outputs the scanned image as it is, as imaging data SD.

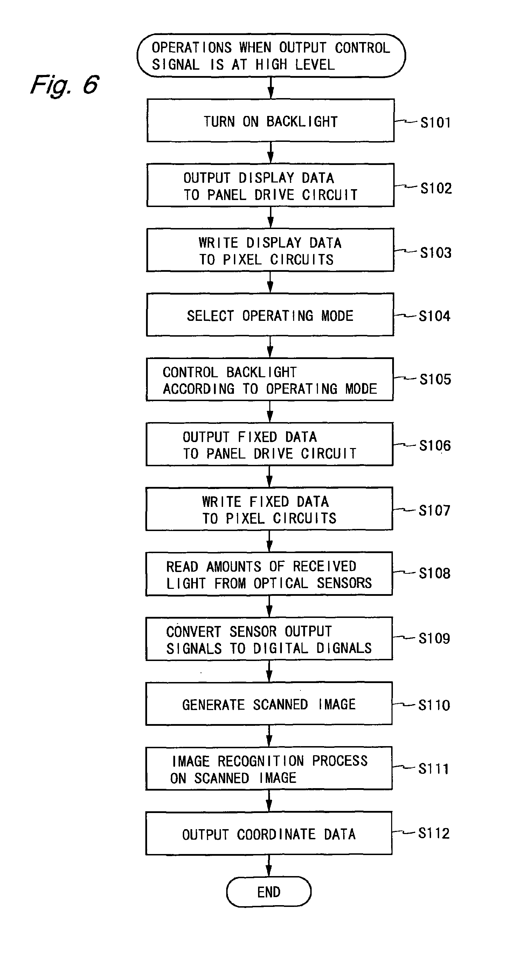

Fig. 6 is a flowchart showing the operations of the liquid crystal display device 10 performed when the output control signal OC is at a high level. As described above, when the output control signal OC is at a high level, the liquid crystal display device 10 alternately performs image display and image input every frame time. Of those steps shown in Fig. 6, steps S101 to S103 are performed during the first half part of the display period, steps S105 to S107 are performed during the first half part of the sensing period, and steps S108 and S109 are performed during the second half part of the sensing period.

The image processing unit 12 first controls a backlight control signal BC to a high level to turn on the backlight 15 (step S101). Then, the image processing unit 12 outputs, as display data D3, display data D2 having been subjected to frame rate conversion, to the panel drive circuit 17 (step S102). The panel drive circuit 17 writes voltages according to the display data D3 into the pixel circuits 1 (step S103). With this, an image based on the display data D2 is displayed on the liquid crystal panel 11.

Subsequently, the image processing unit 12 selects an operating mode from among the shadow image mode and the reflection image mode (step S104) and controls the backlight 15 according to the selected operating mode (step S105). In step S105, the backlight control signal BC is at a low level (indicating turn-off) in the shadow image mode, and is at a high level (indicating turn-on) in the reflection image mode. Then, the image processing unit 12 outputs, as display data D3, fixed data Df to the panel drive circuit 17 (step S106). The panel drive circuit 17 writes voltages according to the fixed data Df into the pixel circuits 1 (step S107). With this, an image based on the fixed data Df (e.g., a white image or a blue image) is displayed on the liquid crystal panel 11.

Subsequently, the image processing unit 12 reads voltages according to the amounts of received light, from the optical sensors 2 (step S108). Then, the A/D converter 13 converts analog sensor output signals SS outputted from the liquid crystal panel 11 to digital signals (step S109). Then, the image processing unit 12 generates a scanned image, based on the digital signals obtained in step S109 (step S110). The image processing unit 12 then performs an image recognition process on the scanned image generated in step S110 to determine an object position in the scanned image (step S111). The image processing unit 12 then outputs coordinate data Co representing a touch position, external to the liquid crystal display device 10 (step S112).

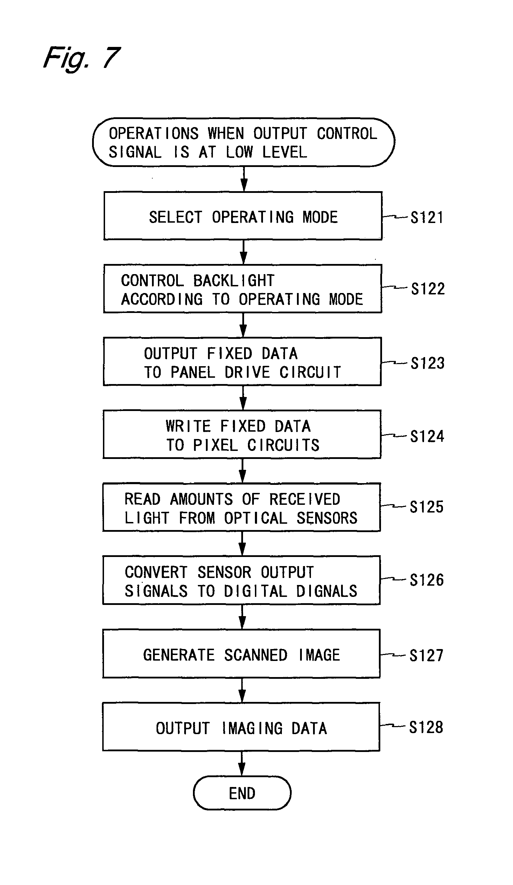

Fig. 7 is a flowchart showing the operations of the liquid crystal display device 10 performed when the output control signal OC is at a low level. As described above, when the output control signal OC is at a low level, the liquid crystal display device 10 performs image input during all frame times. As shown in Fig. 7, in steps S121 to S127, the liquid crystal display device 10 performs the same operations as those in steps S104 to S110 (Fig. 6). Subsequent to step S127, the image processing unit 12 outputs a scanned image generated in step S127 as it is, as imaging data SD (step S128).

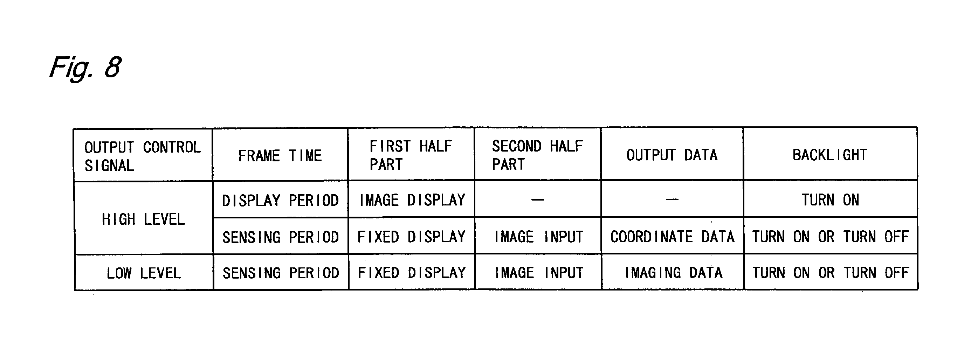

The operations of the liquid crystal display device 10 are summarized as shown in Fig. 8. Note that, in Fig. 8, displaying an image based on display data D2 is described as "image display" and displaying an image based on fixed data Df is described as "fixed display".

Fig. 9 is a timing chart for the liquid crystal display device 10 for when the output control signal OC is at a high level. As shown in Fig. 9, a vertical synchronizing signal VSYNC goes to a high level every frame time. Frame times alternate between a display period and a sensing period. A sense signal SC is a signal that is at a low level during the first half part of the frame time and is at a high level during the second half part. Here, fixed data Df is data representing a white image, and the backlight 15 is turned off during the sensing period.

During the first half part of the display period, the switches 35 and 36 are placed in an on state and all the data signal lines SR1 to SRn, SG1 to SGn, and SB1 to SBn are connected to the data signal line drive circuit 32. During this first half part, first, the voltage of the scanning signal line G1 goes to a high level. Then, the voltage of the scanning signal line G2 goes to a high level and thereafter the voltages of the scanning signal lines G3 to Gm go to a high level in turn. During a period during which the voltage of a scanning signal line Gi is at a high level, voltages (voltages according to display data D2) to be written into 3n pixel circuits 1 connected to the scanning signal line Gi are applied to the data signal lines SR1 to SRn, SG1 to SGn, and SB1 to SBn.

During the second half part of the display period, the sensor row drive circuit 33 does not operate. Thus, during this second half part, a read voltage and a reset voltage are not applied to the sensor read lines RW1 to RWm and the sensor reset lines RS1 to RSm.

During the first half part of the sensing period, the voltages of the scanning signal lines G1 to Gm change in the same manner as during the first half part of the display period, and voltages according to data representing a white image are applied to the data signal lines SR1 to SRn, SG1 to SGn, and SB1 to SBn.

During the second half part of the sensing period, the switch 38 is placed in an on state and the switches 37 are placed in an on state in a time-division manner. Therefore, a power supply voltage VDD is fixedly applied to the B data signal lines SB1 to SBn, and the G data signal lines SG1 to SGn are connected to the input terminals of the sensor output amplifiers 34 in a time-division manner. During this second half part, first, the sensor read line RW1 and the sensor reset line RS1 are selected. Then, the sensor read line RW2 and the sensor reset line RS2 are selected and thereafter the sensor read lines RW3 to RWm and the sensor reset lines RS3 to RSm are selected in turn on a pair-by-pair basis. A read voltage and a reset voltage are applied to the selected sensor read line and sensor reset line, respectively. During a period during which a sensor read line RWi and a sensor reset line RSi are selected, voltages according to the amounts of light detected by the n optical sensors 2 connected to the sensor read line RWi are outputted to the G data signal lines SG1 to SGn.

A backlight control signal BC is at a high level during the display period and is at a low level during the sensing period. Therefore, the backlight 15 is turned on during the display period and is turned off during the sensing period. Note that, in a timing chart for when the output control signal OC is at a low level, only those signal waveforms for the sensing period shown in Fig. 9 repeatedly appear.

The effects of the liquid crystal display device 10 according to the present embodiment will be described below. In the liquid crystal display device 10, display data which is used before reading by the panel drive circuit 17 is performed (display data during the first half part of the sensing period) is switched to fixed data Df, and image input using the optical sensors 2 is performed after an image based on the fixed data Df is displayed. When an image based on the fixed data Df is displayed, the light transmittances of the liquid crystal panel 11 and the states of the pixel circuits 1, the signal lines, etc., included in the liquid crystal display device 10 are not influenced by a previous displayed image. Accordingly, by displaying an image suitable for image input using fixed data Df and thereafter performing image input, the influence of a displayed image is eliminated, enabling to perform image input with high accuracy, irrespective of displayed image and output an obtained scanned image, and to perform touch position detection with high accuracy based on the scanned image.

In particular, in the case in which data representing an image with a single color is used as fixed data, when an image with a single color is displayed, the light transmittances of the liquid crystal panel 11 and the states of the pixel circuits 1, the signal lines, etc., included in the liquid crystal display device 10 become uniform. Accordingly, by performing image input after displaying an image with a single color, the influence of a displayed image is eliminated and the internal states of the liquid crystal display device 10 are uniformalized, enabling to perform image input and touch position detection with high accuracy.

In addition, in the case in which data representing an image with a single color including a large amount of color component with a high light reception sensitivity of the optical sensors 2 is used as fixed data, when image input is performed after image display, the optical sensors 2 operate at a high light reception sensitivity. Accordingly, the influence of a displayed image is eliminated and the internal states of the displayed image are uniformalized, and the light reception sensitivity of the optical sensors 2 increases, enabling to perform image input and touch position detection with high accuracy. Specifically, by using data representing a white image as fixed data, the above-described effects can be obtained. In addition, since, when the liquid crystal panel 11 is formed of CG silicon, the light reception sensitivity of the optical sensors 2 is high for blue light, by using data representing a blue image as fixed data, too, the above-described effects can be obtained.

In addition, by the image processing unit 12 performing an image recognition process on a scanned image, an object (a finger, etc.) included in the scanned image can be detected by the liquid crystal display device 10. In addition, when a reflection image of an object is detected, a scanned image is darkened and thus a problem of a decrease in the detection accuracy for a touch position becomes remarkable. However, even in such a case, by performing image input after displaying an image suitable for image input using fixed data Df, the influence of display data is eliminated, enabling to perform image input and touch position detection with high accuracy, irrespective of displayed image. In the liquid crystal display device 10, a display data switching process is performed by the image processing unit 12 which is provided in a previous stage to the panel drive circuit 17.

Note that, for the liquid crystal display device 10 according to the present embodiment, various variants can be formed. Although in the above description the liquid crystal display device 10 switches whether to alternately perform image display and image input or continuously perform only image input, according to an output control signal OC, the timing and frequency at which image input is performed may be determined arbitrarily. For example, the liquid crystal display device may perform image display and image input at a ratio of 3:1 when the output control signal OC is at a high level, or may alternately perform image display and image input when the output control signal OC is at a low level. Alternatively, the liquid crystal display device may determine itself the timing at which image input is performed, or may perform image input when receiving an image input instruction from an external source.

The image processing unit 12 may perform other backlight controls than those shown in Fig. 8. For example, during the second half part of the sensing period, the image processing unit may turn on the backlight or may not perform backlight control. The image processing unit may not perform an operating mode selection process and may perform only one of a process for the shadow image mode and a process for the reflection image mode. The image processing unit may perform a frame rate conversion process and a display data switching process as a single process. The image processing unit may have a plurality of fixed data units in advance and may switch between the fixed data units according to the circumstances. For example, the image processing unit may use, in the shadow image mode, fixed data suitable for detecting a shadow image and may use, in the reflection image mode, fixed data suitable for detecting a reflection image.

Although, in the liquid crystal display device 10, the panel drive circuit 17 is formed integrally with the liquid crystal panel 11, all or part of the panel drive circuit 17 may be provided external to the liquid crystal panel. Although in the liquid crystal panel 11 an optical sensor 2 is provided for each pixel, an optical sensor 2 may be provided for a plurality of pixels or may be provided for each sub-pixel. When the liquid crystal panel 11 is formed of other semiconductors, the light reception sensitivity of the photodiodes 6 is high, for example, for green light compared with those for red light and blue light. Thus, in this case, by reading blue as green, a similar liquid crystal display device is configured. Alternatively, when the light reception sensitivity of the photodiodes 6 is high for red light compared with those for green light and blue light, by reading blue as red, a similar liquid crystal display device is configured. Liquid crystal display devices according to these variants also obtain the same effects as those obtained by the liquid crystal display device 10 according to the present embodiment.

### (Second Embodiment)

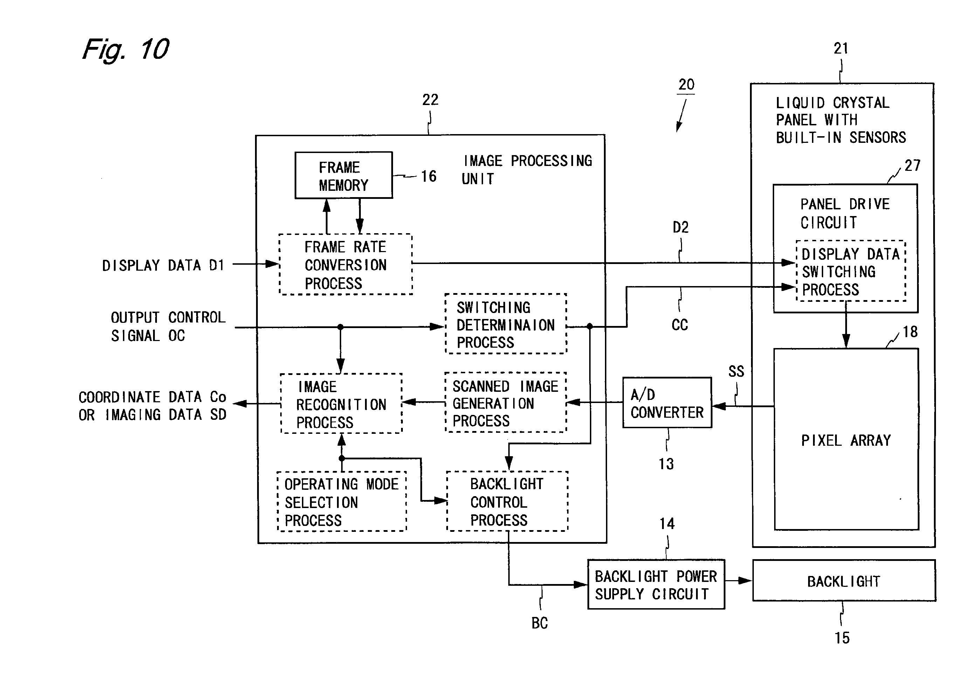

Fig. 10 is a block diagram showing a configuration of a liquid crystal display device according to a second embodiment of the present invention. A liquid crystal display device 20 shown in Fig. 10 includes a liquid crystal panel with built-in sensors 21, an image processing unit 22, an A/D converter 13, a backlight power supply circuit 14, and a backlight 15. The liquid crystal panel with built-in sensors 21 (hereinafter, referred to as the liquid crystal panel 21) includes a panel drive circuit 27 and a pixel array 18. In each of the following embodiments, of the components in each embodiment, the same components as those in the already described embodiment are denoted by the same reference numerals and description thereof is omitted.

As with the image processing unit 12 according to the first embodiment, the image processing unit 22 performs a frame rate conversion process, an operating mode selection process, a backlight control process, a scanned image generation process, and an image recognition process, and performs a switching determination process instead of a display data switching process. More specifically, the image processing unit 22 outputs to the panel drive circuit 27 display data D2 having been subjected to frame rate conversion, and outputs to the panel drive circuit 27 a switching control signal CC indicating whether to switch display data to fixed data. The switching control signal CC is, for example, at a low level during the display period and at a high level during the sensing period.

The panel drive circuit 27 is such that a display data switching function is added to the panel drive circuit 17 according to the first embodiment. More specifically, the panel drive circuit 27 performs, as with the panel drive circuit 17, the operation of writing voltages according to display data D2 into pixel circuits of the liquid crystal panel 21, and the operation of reading voltages according to the amounts of received light, from optical sensors of the liquid crystal panel 21. Note, however, that when the switching control signal CC is at a high level the panel drive circuit 27 writes voltages according to fixed data Df suitable for image input, instead of according to display data D2, into the pixel circuits of the liquid crystal panel 21. Hence, during the first half part of the sensing period, an image based on the fixed data Df (e.g., a white image or a blue image) is displayed on the liquid crystal panel 21.

In the liquid crystal display device 20 according to the present embodiment, a display data switching process is performed by the panel drive circuit 27, and the panel drive circuit 27 also functions as a display data switching unit. In the liquid crystal display device 20 configured in the above-described manner, too, display data which is used before reading by the panel drive circuit 17 is performed (display data during the first half part of the sensing period) is switched to fixed data Df, and image input using the optical sensors 2 is performed after an image based on the fixed data Df is displayed. Therefore, according to the liquid crystal display device 20 according to the present embodiment, as with the liquid crystal display device 10 according to the first embodiment, image input and touch position detection can be performed with high accuracy, irrespective of displayed image. Note that in the present embodiment, too, as in the first embodiment, various variants can be formed.

### (Third Embodiment)

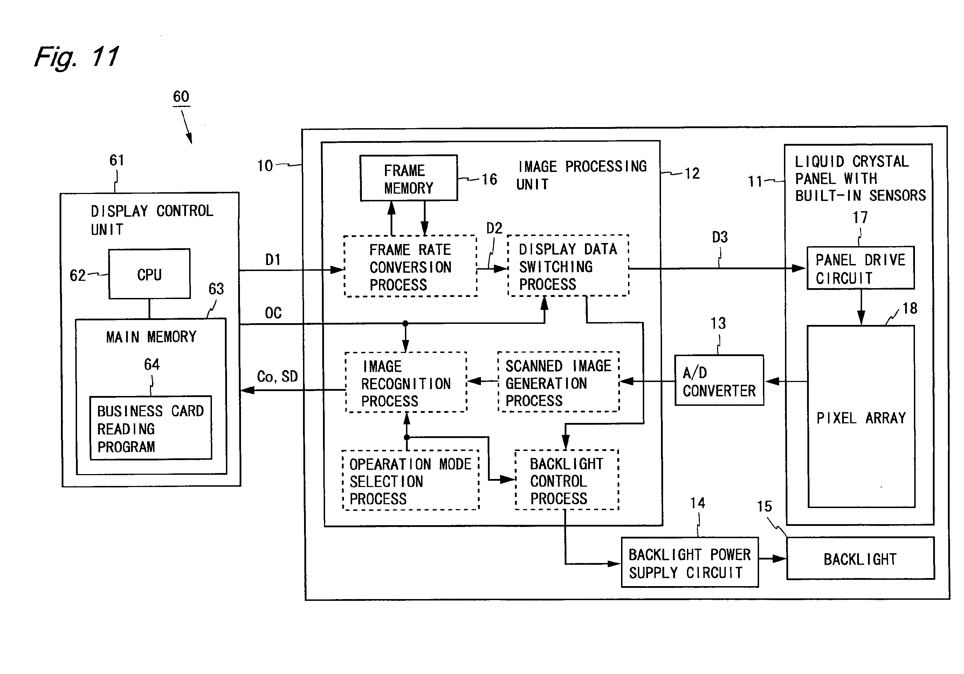

In a third embodiment, an example of the usage pattern of liquid crystal display devices according to the first and second embodiments will be described. Fig. 11 is a block diagram showing a configuration of a business card reading device according to the third embodiment of the present invention. A business card reading device 60 shown in Fig. 11 includes a liquid crystal display device 10 according to the first embodiment and a display control unit 61.

The display control unit 61 is a control unit for the liquid crystal display device'10 and includes a CPU 62 and a main memory 63. The main memory 63 stores a business card reading program 64 and the CPU 62 executes the business card reading program 64 in the main memory 63. The display control unit 61 configured in the above-described manner outputs display data D1 and an output control signal OC to the liquid crystal display device 10, and performs predetermined processes on coordinate data Co and imaging data SD which are outputted from the liquid crystal display device 10.

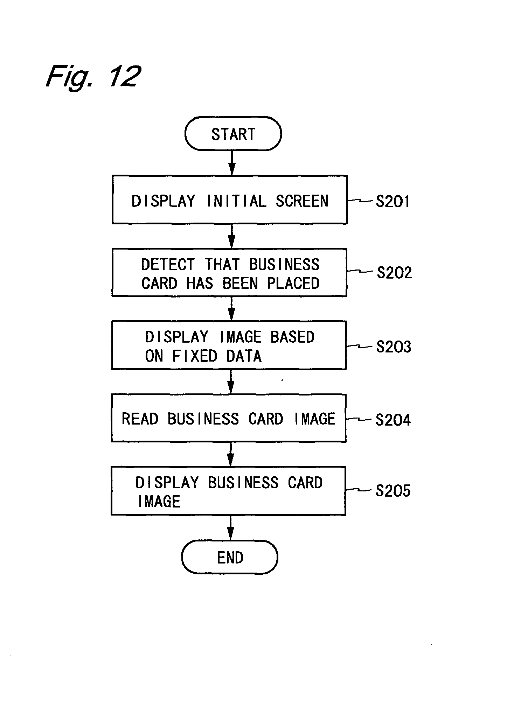

Fig. 12 is a flowchart showing the operations of the business card reading device 60. The business card reading device 60 first displays an initial screen (step S201). In step S201, the display control unit 61 outputs initial screen data and a high-level output control signal OC to the liquid crystal display device 10. The liquid crystal display device 10 displays an initial screen on a liquid crystal panel 11, based on the initial screen data. The initial screen includes, for example, the message "Set the business card", etc. When a user views the initial screen, the user places a business card to be read, in a position where a pixel array 18 of the liquid crystal panel 11 is covered (hereinafter, referred to as the "reading position").

Then, the business card reading device 60 detects that the business card has been placed (step S202). When a business card is placed in the reading position, a characteristic indicating that a business card has been placed on the liquid crystal panel appears in a scanned image which is generated by an image processing unit 12. When the liquid crystal display device 10 detects that the characteristic has appeared in a scanned image, the liquid crystal display device 10 provides notification of such a fact to the display control unit 61. When the display control unit 61 receives the notification, the display control unit 61 performs subsequent processes.

The business card reading device 60 then displays an image based on fixed data (step S203). In step S203, the display control unit 61 outputs a low-level output control signal OC to the liquid crystal display device 10. During a period during which the output control signal OC is at a low level, all frame times are sensing periods and the image processing unit 12 writes voltages according to fixed data Df suitable for image input into pixel circuits of the liquid crystal panel 11. Hence, during the first half part of each frame time, an image based on the fixed data Df (e.g., a white image or a blue image) is displayed on the liquid crystal panel 11.

Subsequently, the business card reading device 60 reads a business card image (step S204). In step S204, the output control signal OC remains at a low level. The liquid crystal display device 10 generates a scanned image, based on signals read from the pixel array 18 and outputs the generated scanned image as imaging data SD. The display control unit 61 treats the imaging data SD outputted from the liquid crystal display device 10, as business card image data.

The business card reading device 60 then displays a business card image (step S205). In step S205, the display control unit 61 outputs the business card image data and a high-level output control signal OC to the liquid crystal display device 10. The liquid crystal display device 10 displays, based on the business card image data, a business card image on the liquid crystal panel 11. The user sees the business card image and checks if the business card is read properly.

As shown above, according to the business card reading device 60 according to the present embodiment, in the liquid crystal display device 10, display data which is used before reading by a panel drive circuit 17 is performed is switched to fixed data Df, and image input using optical sensors 2 is performed after an image based on the fixed data Df is displayed. By thus displaying an image suitable for image input using fixed data Df and thereafter performing image input, the influence of a displayed image is eliminated, enabling to input a business card image with high accuracy, irrespective of displayed image.

Note that, by the above-described method, not only a business card reading device but also any device having an image display function and an image input function can be configured. For example, a QR (Quick Response) code reading device, a fingerprint authentication device, etc., can be configured. In addition, instead of the liquid crystal display device 10 according to the first embodiment, the liquid crystal display device 20 according to the second embodiment or liquid crystal display devices according to the variants of the first and second embodiments may be used. These devices also obtain the same effects as those obtained by the business card reading device 60 according to the present embodiment.

### (Fourth Embodiment)

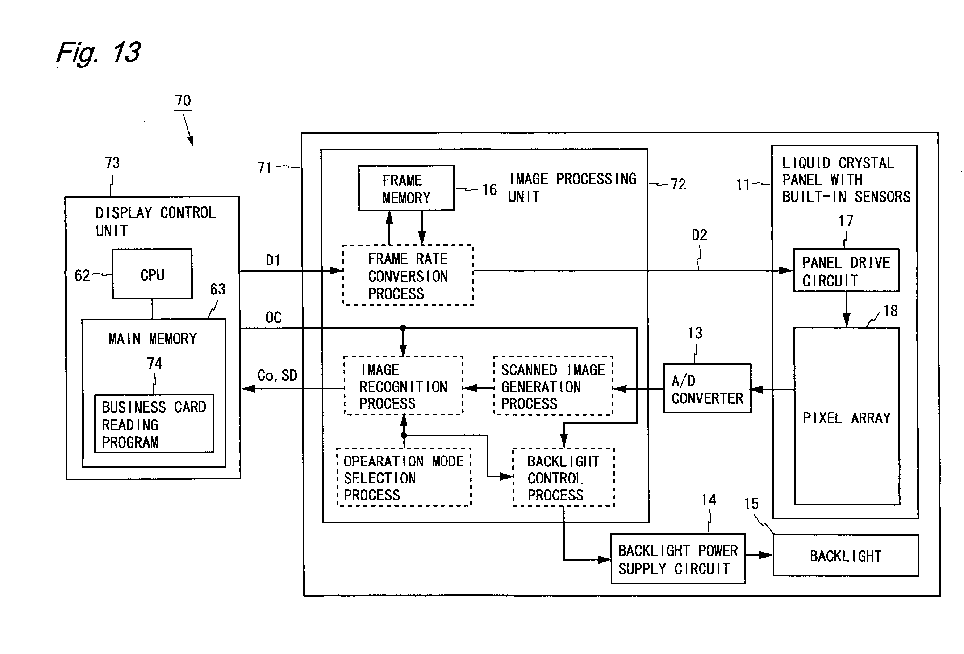

In a fourth embodiment, a method for implementing a similar business card reading device to that according to the third embodiment by a different configuration will be described. Fig. 13 is a block diagram showing a configuration of a business card reading device according to the fourth embodiment of the present invention. A business card reading device 70 shown in Fig. 13 includes a liquid crystal display device 71 and a display control unit 73.

The liquid crystal display device 71 is such that, in the liquid crystal display device 10 according to the first embodiment, the image processing unit 12 is replaced by an image processing unit 72. The image processing unit 72 is such that a display data switching process is eliminated from the image processing unit 12. The image processing unit 72 performs the same frame rate conversion process as that performed by the image processing unit 12 on display data D1, and outputs obtained display data D2 to a panel drive circuit 17.

The display control unit 73 includes, as with the display control unit 61 according to the third embodiment, a CPU 62 and a main memory 63. Note, however, that the CPU 62 executes a business card reading program 74 that is different from the business card reading program 64 according to the third embodiment.

As with the business card reading device 60 according to the third embodiment, the business card reading device 70 performs the operations shown in Fig. 12. Note, however, that in step S203 the display control unit 73 outputs a low-level output control signal OC to the liquid crystal display device 71 and provides, as display data D1, fixed data Df to the liquid crystal display device 71. In other words, when the display control unit 73 provides an image input instruction to the liquid crystal display device 71, the display control unit 73 provides, as display data D1, fixed data Df suitable for image input. Therefore, during a period during which an image input instruction is provided, an image based on the fixed data Df (e.g., a white image or a blue image) is displayed on a liquid crystal panel 11 of the liquid crystal display device 71.

As shown above, according to the business card reading device 70 according to the present embodiment, when the display control unit 73 provides an image input instruction to the liquid crystal display device 71, the display control unit 73 provides, as display data D1, fixed data Df suitable for image input. Hence, in the liquid crystal display device 71, display data which is used before reading by the panel drive circuit 17 is performed is the fixed data Df, and image input using optical sensors 2 is performed after an image based on the fixed data Df is displayed. By thus displaying an image suitable for image input using fixed data Df and thereafter performing image input, the influence of a displayed image is eliminated, enabling to input a business card image with high accuracy, irrespective of displayed image. Note that in the present embodiment, too, as in the third embodiment, various variants can be formed.

As shown above, according to liquid crystal display devices of the present invention, by displaying an image suitable for image input using fixed data and thereafter performing image input, the influence of a displayed image is eliminated, enabling to perform image input and touch position detection with high accuracy, irrespective of displayed image. Note that, by the above-described methods, display devices other than liquid crystal display devices can also be configured.

### INDUSTRIAL APPLICABILITY

Display devices of the present invention have features that they can perform image input and touch position detection with high accuracy, irrespective of displayed image, and thus, can be used as various display devices, beginning with liquid crystal display devices.

## Claims

1. A display device including a plurality of optical sensors, the display device comprising:
a display panel including a plurality of pixel circuits and a plurality of optical sensors which are arranged two-dimensionally;
a drive circuit that performs an operation of writing signals generated according to display data into the pixel circuits, and an operation of reading signals generated according to amounts of received light from the optical sensors; and
a display data switching unit that switches display data which is used before reading by the drive circuit is performed, to fixed data suitable for image input.

2. The display device according to claim 1, wherein the fixed data is data representing an image with a single color.

3. The display device according to claim 2, wherein the fixed data is data representing an image with a single color including a large amount of color component with a high light reception sensitivity of the optical sensors.

4. The display device according to claim 3, wherein the fixed data is data representing a white image.

5. The display device according to claim 3, wherein the display panel is a liquid crystal panel formed of CG (Continuous Grain) silicon, and
the fixed data is data representing a blue image.

6. The display device according to claim 1, further comprising an image recognition processing unit that performs an image recognition process on a scanned image based on the signals read from the optical sensors, to detect an object included in the scanned image.

7. The display device according to claim 6, further comprising a backlight that irradiates a back surface of the display panel with light, wherein
the image recognition processing unit detects at least a reflection image of the object.

8. The display device according to claim 1, wherein the display data switching unit is included in an image processing unit which is provided in a previous stage to the drive circuit.

9. The display device according to claim 1, wherein the display data switching unit is included in the drive circuit.

10. A method of driving a display device having a display panel which includes a plurality of pixel circuits and a plurality of optical sensors which are arranged two-dimensionally, the method comprising the steps of:
writing signals generated according to display data into the pixel circuits;
reading signals generated according to amounts of received light, from the optical sensors; and
switching display data which is used before reading is performed, to fixed data suitable for image input.

11. A device having an image display function and an image input function, the device comprising:
a display device; and a display control unit, wherein
the display device includes:
a display panel including a plurality of pixel circuits and a plurality of optical sensors which are arranged two-dimensionally; and
a drive circuit that performs an operation of writing signals generated according to display data which is provided from the display control unit, into the pixel circuits, and an operation of reading signals generated according to amounts of received light, from the optical sensors, and
when the display control unit provides an image input instruction to the display device, the display control unit provides, as the display data, fixed data suitable for image input.
